# EUROPEAN PATENT APPLICATION

(11) **EP 2 786 970 A1**
(43) Date of publication of application: **08.10.2014**
(21) Application number: 14460020.2
(22) Date of filing: 28.03.2014
(51) Int. Cl.: C02F 3/12, C02F 3/32, C02F 3/34, E03B 1/04, C02F 3/04, C02F 103/00

(54) **Waste water treatment method**

(30) Priority: 02.04.2013 PL 40341613
(71) Applicant: Firma Bartosz Sp. J. Bujwicki, Sobiech, 15-399 Bialystok (PL)
(72) Inventor: Bujwicki, Bernard, 18-106 Niewodnica Ko?cielna (PL); Bujwicki, Dawid, 18-106 Niewodnica Ko?cielna (PL)
(74) Representative: Jedrzejewski, Michal

(57) **Abstract**

The method of treatment of waste water such as black water and/or grey water, that is, waste water from sinks, baths, showers, washing machines, dishwashers in a common sewer system, in which micro-organisms are administered at the waste water origin point or in its vicinity and this point is the beginning of the process of decomposition and dissolution of the organic components of the waste water, wherein a substantial part of the process takes place in a bioreactor located near the waste water origin point, from which the waste water outflows as dirty water; the process, however, also continues throughout the entire common sewer system up to a dirty water treatment plant.

## Description

The object of the invention is a method of treatment of waste water such as black water and/or grey water, i.e. waste water from sinks, baths, showers, washing machines, dishwashers, in a common sewer system.

The prior art discloses methods of waste water treatment in which waste water is at first transported from the point of origin and in which biological processes are advised against as they are accompanied by odour caused by the formation of hydrogen sulphide due to decomposition. Biological processes are carried out only in the final phase of the process, that is, in waste water treatment plants.

The method of treatment of waste water such as black water and/or grey water, that is, waste water from sinks, baths, showers, washing machines, dishwashers, in a common sewer system, according to the invention, is characterised in that micro-organisms are administered at the waste water origin point or in its vicinity and this point is the beginning of the process of decomposition and dissolution of the organic components of the waste water, wherein a substantial part of the process takes place in a bioreactor located near the waste water origin point, from which the waste water outflows as dirty water; the process, however, also continues throughout the entire common sewer system up to a dirty water treatment plant.

Preferably, photosynthetic bacteria and lactic acid bacteria are primarily used as the microorganisms.

Preferably, the process is carried out at a temperature between +8°C and +45°C.

Preferably, the process is carried out in an anaerobic environment.

Preferably, the waste water outflows from the bioreactor as dirty water directed to a pumping station, from where it is forced through a buffer tank for coagulation and treatment in a lamella separator.

Preferably, the waste water outflows from the bioreactor as dirty water directed to a pumping station, from where it is forced through a buffer tank for coagulation and treatment in a lamella separator and subsequently in filters with granular beds.

Preferably, the waste water outflows from the bioreactor as dirty water directed to a pumping station, from where it is forced through a buffer tank for coagulation and treatment in a lamella separator, then in filters o with granular beds and subsequently it is sterilised with UV radiation.

Preferably, the water after the treatment in the lamella separator is collected in a special tank to be used for watering and fertilising crops.

Preferably, the water after the treatment in the granular filters is collected in a special tank to be used for watering and fertilising crops.

Preferably, the water after the treatment by the UV lamps is collected in a special tank to be used for watering and fertilising crops.

Preferably, black water and grey water are entered into the common sewer system through separate ducts, wherein the black water is introduced to the bioreactor, in which the process of further treatment takes place, and where, as a result, it is converted to dirty water, which is evacuated from the separator to join the grey water.

Preferably, grey water is collected from the point of origin with a separate sewer, strained through sieves and directed through a buffer system for treatment in biological filters; it is then joined with the dirty water from the biological reactor.

Preferably, grey water is collected from the point of origin with a separate sewer, strained through sieves and directed for treatment in biological filters; it is then joined with the dirty water from the biological reactor.

Preferably, black water and grey water are discharged by separate sewer systems, whereas the grey water is directed through the buffer system to sieves for straining and for further treatment in biological filters, and, subsequently, it is supplied with a pressure booster to a toilet bowl and urinal flushing system.

Preferably, grey water prior to entering the treatment system is directed to a heat recovery system, where it gives up energy, which is then used for heating, i.e., domestic hot water.

Preferably, grey water, after the treatment in the biological filters, is collected in an auxiliary tank.

Preferably, grey water, after the treatment and before entering the toilet bowl and urinal flushing system, is sterilised with UV radiation.

Preferably, grey water, after the treatment and before entering the toilet bowl and urinal flushing system, is coagulated and treated in the lamella separator and sterilised with UV radiation.

Preferably, grey water, after the treatment and before entering the toilet bowl and urinal flushing system, is coagulated and treated in the lamella separator, treated in granular filters and sterilised with UV radiation.

Preferably, grey water, before entering the toilet bowl and urinal flushing system, is coagulated and treated in the lamella separator.

Preferably, grey water, before entering the toilet bowl and urinal flushing system, is coagulated and treated in the lamella separator, and subsequently treated in granular filters.

Preferably, grey water, after the treatment and before entering the toilet bowl and urinal flushing system, is coagulated and treated in the lamella separator, then in granular filters and, subsequently, sterilised with UV radiation.

Preferably, black water, grey water and urine are separated at the point of origin and evacuated through separate sewer systems, wherein urine is collected in a special tank.

In the method according to the invention, waste water is treated immediately after its generation and in the place of its origin.

Additionally, solid organic matter is removed immediately after the generation of waste water, in a bioreactor, almost at the place of its origin. Additionally, primarily dirty water containing small amounts of solid organic matter is carried through a sewer system to a treatment plant. In conventional methods all waste water is carried together with all solid organic matter. The high density of this waste water is a source of problems in the operation of sewer systems and necessitates frequent maintenance operations, involving unclogging the sewer system from sludge deposits. Furthermore, the method according to the invention involves odour-free waste water treatment.

In case of traditional systems, the inhabitants remain passive, as their participation is limited to the payment of fees for utilities.

Moreover, using the method according to the invention makes it feasible to utilise treated waste water by households, by extending pipes with waste water to homes and adding an outlet for watering lawns and garden shrubs or to irrigate crops for biomass.

The following is an embodiment of the invention.

The method according to the invention is based largely on biological and chemical waste water treatment, wherein the biological treatment is critical.
A system using the method according to the invention comprises the following:
1) Place of waste water origin.
2) Drains for discharging waste water from the places of origin to bioreactors.
3) Adequately equipped bioreactors located within the premises of the owners of the facilities connected to the sewer system.
4) Collectors that collect dirty water from individual homes and discharge it to a dirty water treatment plant.
5) Dirty water treatment plant.
6) Treated water receiving tank.
The method according to the invention can be performed in the following steps.

### Step I. Biological anaerobic part of the process.

This is a crucial step, its main part takes place in bioreactors. During this step the solid organic matter in the treated waste water is greatly reduced - virtually eliminated. The water that leaves bioreactors is a dirty water. Nevertheless, the microorganisms are active under favourable conditions along the entire sewer system.

### Step II. Chemical part.

Coagulant is added at the dirty water treatment station Then it is mixed with water and, after flocculation, the sludge is separated from the purified water in a lamella separator. If the first step of the process is carried out in conditions favourable to microorganisms, the turbidity of the water downstream the separator is 2.0 and the water has very low COD and BOD5. In less favourable conditions this water requires additional purification.

### Step III. Filtration and aeration.

If the first step is carried out in less favourable conditions, the water downstream the lamella separator is filtered and aerated.

### Step IV. Treated waste water is discharged to a receiving tank or to the system of irrigation of garden plants, trees and lawns.

### 1. Adding microorganisms.

Microorganisms can be added by property owners, who would receive, each month, an adequate amount of microorganisms and will add this biological material to plumbing fixtures (washbasins, sinks, toilet bowls, etc.), i.e., in the amount of 60 ml 2 times per week. Microorganisms can also be added externally to the bioreactor by the system maintenance staff. The added fluid should be certified and may not be harmful to living organisms. It will thus pose no hazards to human or animal health. Photosynthetic ferment bacteria or lactic acid ferment bacteria can be used as microorganisms. Using the method according to the invention can also endorse environmentally-friendly attitudes towards the property owners and eliminate chemical cleaning and washing agents, which are replaced with biodegradable agents.

### 2. Drains.

It is particularly preferable to create two separate sewer drains: one for black water and one for grey water (from sinks, tubs, showers); however, it is of course possible to use one drain for both kinds of waste water. Grey water should be drained so that it is possible to recover its energy in order to obtain domestic hot water (installation of a heat exchanger).

The drain with black water should be connected to a bioreactor, whereas the grey water drain should be connected to a dirty water pumping station interlocked with the bioreactor.

### 3. Bioreactor block.

It consists of two interconnected components: a bioreactor and a dirty water pumping station.

The bioreactor is a sealed tank (made of, for example, reinforced concrete rings; it can also be an adapted existing sealed septic tank).

Taking into account the climate in Poland, the bioreactor should be thermally insulated and equipped with a system allowing adequate flow of waste water within and out of the reactor, as well as with a gas outflow from the reactor chamber, ended with a vent.

The dirty water flows naturally from the reactor to the dirty water pumping station. The pumping station comprises the following:
- sealed chamber made of concrete or plastic rings,
- dirty water pump driven into the ground, together with a hydraulic installation connected to the collector,
- level sensor connected to a power supply cabinet,
- power supply cabinet with a 230 V electrical connection forked from the electric installation of the house.

### 4. Collector.

The collector is a pressure pipe which collects dirty water from each pumping station and drains it to the dirty water treatment station (to the collective bioreactor). The collector is laid at a depth typical for water supply collectors. 5. Dirty water treatment plant.

The dirty water treatment plant comprises the following:
- collective bioreactor whose design is the same as the above bioreactors but whose capacity is appropriately greater.
- dirty water buffer tank which stabilises the efficiency of the dirty water treatment facilities.
- station for dispensing chemical agents for coagulation,
- strainer used to hold any larger solid elements,
- mixer used for mixing water with the coagulant,
- lamella separator integrated with a mixing and flocculation chamber,
- rapid filter with a strewn bed, pump-assisted,
- system of aeration and degassing aromatics,
- system of rinsing the filtration bed with a rinsing water tank and a rinsing water pump,
- settler for washings and the sludge from coagulation, with a pumping station. The elements of the station (other than the bioreactor, buffer and settler for washings) may be located in a building with a steel frame clad with sandwich panels.

### 6. Discharge of the treated waste water.

It is assumed that a high level of purity of the waste water will allow it to be reused for watering garden shrubs, lawns, etc.

For this reason, different ways of carrying the water are provided for; for example, a collector for treated waste water may be placed in parallel to the collector for dirty water. There would be connection points added to the former, with outlets at individual premises.

## Claims

1. The method of treatment of waste water such as black water and/or grey water, that is, waste water from sinks, baths, showers, washing machines, dishwashers in a common sewer system, **characterised in that** micro-organisms are administered at the waste water origin point or in its vicinity and this point is the beginning of the process of decomposition and dissolution of the organic components of the waste water, wherein a substantial part of the process takes place in a bioreactor located near the waste water origin point, from which the waste water outflows as dirty water; the process, however, also continues throughout the entire common sewer system up to a dirty water treatment plant.

2. A method according to claim. 1, **characterised in that** photosynthetic bacteria and lactic acid bacteria are primarily used as the microorganisms.

3. A method according to claim. 1-2, **characterised in that** the process is carried out at a temperature between +8°C and +45°C.

4. A method according to claim. 1-3, **characterised in that** the process is carried out in an anaerobic environment.

5. A method according to claim. 1-4, **characterised in that** the waste water outflows from the bioreactor as dirty water directed to a pumping station, from where it is forced through a buffer tank for coagulation and treatment in a lamella separator.

6. A method according to claim. 1-4, **characterised in that** the waste water outflows from the bioreactor as dirty water directed to a pumping station, from where it is forced through a buffer tank for coagulation and treatment in a lamella separator and subsequently in filters with granular beds.

7. A method according to claim. 1-4, **characterised in that** the waste water outflows from the bioreactor as dirty water directed to a pumping station, from where it is forced through a buffer tank for coagulation and treatment in a lamella separator and subsequently in filters with granular beds and then sterilised with UV radiation.

8. A method according to claim. 1-5, **characterised in that** the water after the treatment in the lamella separator is collected in a special tank to be used for watering and fertilising crops.

9. A method according to claim. 1-6, **characterised in that** the water after the treatment in the granular filters is collected in a special tank to be used for watering and fertilising crops.

10. A method according to claim. 1-7, **characterised in that** the water after the treatment by the UV lamps is collected in a special tank to be used for watering and fertilising crops.

11. A method according to claim. 1-4, **characterised in that** black water and grey water is entered into the common sewer system through separate ducts, wherein black is introduced to the bioreactor, in which the process of further treatment takes place and black water is converted to dirty water, which is evacuated from the separator to join grey water.

12. A method according to claim. 5, **characterised in that** grey water is collected from the point of origin with a separate sewer, strained through sieves and directed through a buffer system for treatment in biological filters; it is then joined with the dirty water from the biological reactor.

13. A method according to claim. 5, **characterised in that** grey water is collected from the point of origin with a separate sewer, strained through sieves and directed for treatment in biological filters; it is then joined with the dirty water from the biological reactor.

14. A method according to claim. **1-3,characterised in that** black water and grey water are evacuated through separate sewer systems, whereas grey water is directed through the buffer system to sieves for straining and for further treatment in biological filters, and supplied with a pressure booster to a toilet bowl and urinal flushing system.

15. A method according to claim. 14, **characterised in that** grey water prior to entering the treatment system is directed to a heat recovery system, where it gives up energy, which is then used for heating of, i.e., domestic hot water.

16. A method according to claim. 15, **characterised in that** grey water, after the treatment in the biological filters, is collected in an auxiliary tank.

17. A method according to claim. 16, **characterised in that** grey water, after the treatment and before entering the toilet bowl and urinal flushing system, is sterilised with UV radiation.

18. A method according to claim. 9, **characterised in that** grey water, after the treatment and before entering the toilet bowl and urinal flushing system, is coagulated and treated in the lamella separator and sterilised with UV radiation.

19. A method according to claim. 9, **characterised in that** grey water, after the treatment and before entering the toilet bowl and urinal flushing system, is coagulated and treated in the lamella separator, treated in granular filters and sterilised with UV radiation.

20. A method according to claim. 9, **characterised in that** grey water, before entering the toilet bowl and urinal flushing system, is coagulated and treated in the lamella separator.

21. A method according to claim. 9, **characterised in that** grey water, before entering the toilet bowl and urinal flushing system, is coagulated and treated in the lamella separator, treated in granular filters.

22. A method according to claim. 9, **characterised in that** grey water, after the treatment and before entering the toilet bowl and urinal flushing system, is coagulated and treated in the lamella separator, treated in granular filters and sterilised with UV radiation.

23. A method according to claim. 1-22, **characterised in that** black water, grey water and urine are separated at the point of origin and evacuated through separate sewer systems, wherein urine is collected in a special tank.
